# EUROPEAN PATENT SPECIFICATION

(11) **EP 4 036 418 B1**
(45) Date of publication and mention of the grant of the patent: **13.03.2024**
(21) Application number: 22153568.5
(22) Date of filing: 27.01.2022
(51) Int. Cl.: F04D 29/28, F04D 29/42, F04D 29/44, F04D 29/46, F04D 29/70, B60H 1/00

(54) **CENTRIFUGAL BLOWER**
ZENTRIFUGALGEBLÄSE
VENTILATEUR CENTRIFUGE

(30) Priority: 01.02.2021 JP 2021014512
(43) Date of publication of application: 03.08.2022
(73) Proprietor: Valeo Japan Co., Ltd, Kumagaya-shi, Saitama 360-0193 (JP)
(72) Inventor: HAYASHI, Naoto, Kumagaya-shi, 360-0193 (JP); YOSHIZAKI, Hisayoshi, Kumagaya-Shi, 360-0193 (JP); KANAMORI, Ryosuke, Kumagaya-Shi, 360-0193 (JP); HARA, Keisuke, Kumagaya-Shi, 360-0193 (JP)
(74) Representative: Valeo Systèmes Thermiques

(56) References cited:
- WO-A1-2018/112316
- WO-A1-2019/188754
- CN-A- 110 273 845
- FR-A1- 3 076 768
- FR-A1- 3 086 208

## Description

### BACKGROUND OF THE INVENTION

### 1. Field of the Invention

The present invention relates to a centrifugal blower including a filter.

### 2. Description of the Related Art

Commonly, a centrifugal blower used in a vehicle-use air conditioning device includes an impeller and a scroll housing that houses the impeller, and an existence of a type wherein a separation cylinder is inserted in the scroll housing is known. Also, the centrifugal blower includes an air intake housing connected to the scroll housing, and a filter disposed inside the air intake housing. An external air inlet and an internal air inlet are formed in the air intake housing. The filter is disposed between the external air inlet and internal air inlet and the separation cylinder. This kind of centrifugal blower is disclosed in Patent Literature 1 and 2.

A centrifugal blower described in Patent Literature 1 and 2 can operate in an internal and external air two layer flow mode wherein two kinds of air (vehicle internal air and external air) of mutually differing properties are blown simultaneously. Specifically, the centrifugal blower is such that air flowing inside the centrifugal blower can be controlled in such a way that internal air introduced from the internal air inlet passes through the filter and enters an interior of the separation cylinder, simultaneously with which external air introduced from the external air inlet passes through the filter and flows through an exterior of the separation cylinder.

Herein, there is a demand for an air blowing efficiency of this kind of centrifugal blower to be improved.

Patent Literature 1: JP-A-2019-44739
Patent Literature 2: International Publication WO 2020-065164

### SUMMARY OF THE INVENTION

The invention has an object of providing a centrifugal blower wherein air blowing efficiency is improved.

A preferred embodiment of the invention provides a vehicle-use centrifugal blower, including a motor, an impeller that has a multiple of blades forming a peripheral direction blade cascade, is driven by the motor in such a way as to rotate around an axis of rotation that extends in an axial direction, and discharges air in a space on a radial direction inner side of the blade cascade in a centrifugal direction, a scroll housing that houses the impeller, has a suction port opening in the axial direction and a discharge port opening in the peripheral direction, and sends air drawn in from the suction port out from the discharge port owing to a rotation of the impeller, a partitioning wall that divides an internal space of the scroll housing in the axial direction, a separation cylinder inserted into the scroll housing, which divides a flow of air sucked into the scroll housing from the suction port into a first air flow that passes through an outer side of the separation cylinder and a second air flow that passes through an inner side of the separation cylinder, an air intake housing, which is connected to the scroll housing, and has an external air inlet for taking in air outside a vehicle, an internal air inlet for taking in air inside the vehicle, and an internal space that forms an air passage between the external air inlet and internal air inlet and the scroll housing, a filter disposed in the internal space of the air intake housing in such a way that a filtering face intersects air flowing through the internal space, a first rotary door, which operates between the external air inlet and internal air inlet and the filter and adjusts ratios of external air introduced from a first external air inlet portion, which is one portion of the external air inlet, into the internal space and internal air introduced from a first internal air inlet portion, which is one portion of the internal air inlet, into the internal space, a second rotary door, which operates between the external air inlet and internal air inlet and the filter and adjusts ratios of external air introduced from a second external air inlet portion, which is another portion of the external air inlet, into the internal space and internal air introduced from a second internal air inlet portion, which is another portion of the internal air inlet, into the internal space, and a third rotary door, which operates between the external air inlet and internal air inlet and the filter and adjusts ratios of external air introduced from a third external air inlet portion, which is still another portion of the external air inlet, into the internal space and internal air introduced from a third internal air inlet portion, which is still another portion of the internal air inlet, into the internal space, wherein the first rotary door, the second rotary door, and the third rotary door are aligned in that order, the internal space of the air intake housing includes a first space, which is an operating range of the first rotary door, a second space, which is a space neighboring the first space and is an operating range of the second rotary door, and a third space, which is a space neighboring the second space and is an operating range of the third rotary door, the filter has a first region opposing the first space, a second region opposing the second space, and a third region opposing the third space, the first region coincides with a tongue portion of the scroll housing when looking in the axial direction, the second region includes the axis of rotation when looking in the axial direction, the third region is positioned on a side of the second region opposite to that of the first region, and a filtering face area of the third region is greater than a filtering face area of the first region.

According to the heretofore described embodiment of the invention, an air blowing efficiency of a centrifugal blower can be improved.

### BRIEF DESCRIPTION OF THE DRAWINGS

Fig. 1 is a perspective view of a centrifugal blower according to a first embodiment of the invention.
Fig. 2 is a longitudinal sectional view including a meridional cross-section of the centrifugal blower shown in Fig. 1.
Fig. 3 is a longitudinal sectional view including a meridional cross-section of the centrifugal blower cut along a section perpendicular to the section in Fig. 2.
Fig. 4 is a perspective view of a separation cylinder.
Fig. 5 is a drawing for describing an operating range of a rotary door.
Fig. 6 is a perspective view of a filter.
Fig. 7 is a sectional view of the centrifugal blower along a I-I line of Fig. 3.
Fig. 8 is a drawing corresponding to Fig. 3, and is a longitudinal sectional view of a centrifugal blower according to a second embodiment.
Fig. 9 is a sectional view of the centrifugal blower along a II-II line of Fig. 8.
Fig. 10 is a drawing corresponding to Fig. 3, and is a longitudinal sectional view of a centrifugal blower according to a third embodiment.
Fig. 11 is a drawing corresponding to Fig. 3, and is a longitudinal sectional view of a centrifugal blower according to a fourth embodiment.
Fig. 12 is a perspective view of a partitioning wall structure shown in Fig. 11.

### DESCRIPTION OF THE PREFERRED EMBODIMENTS

### First Embodiment

Hereafter, a first embodiment of the invention will be described, with reference to the drawings.

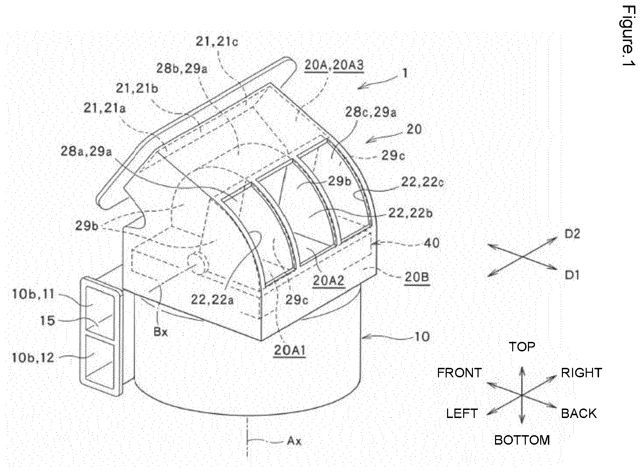

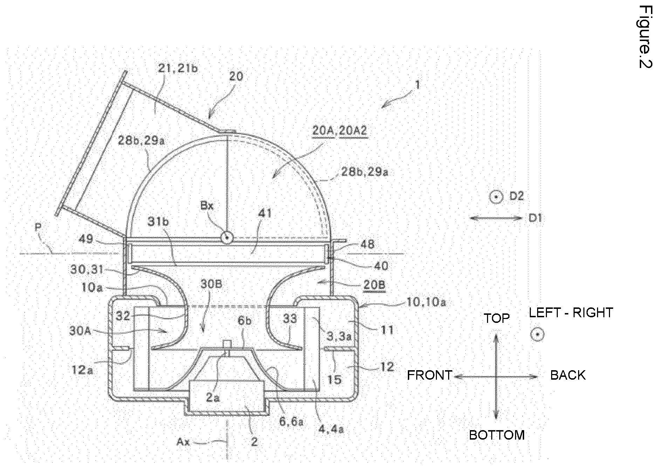

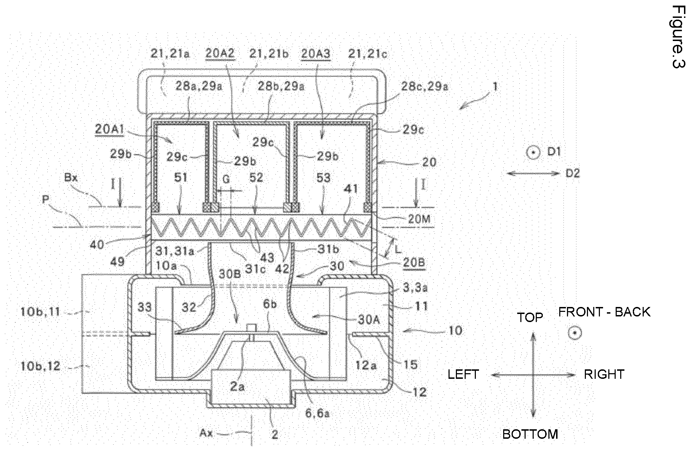

Fig. 1 is a perspective view of a centrifugal blower according to a first embodiment of the invention. Fig. 2 and Fig. 3 are drawings schematically showing cross-sections of the centrifugal blower shown in Fig. 1. Note that Fig. 3 is a drawing showing a cross-section that is perpendicular to the cross-section in Fig. 2. In Fig. 2 and Fig. 3, and in other drawings too, an arrow that extends in a direction perpendicular to the plane of the drawing is indicated by a reference sign wherein a dot is provided in a circle.

A centrifugal blower 1 shown in Fig. 1 to Fig. 3 is a centrifugal blower installed in a vehicle-use air conditioning device, and has a motor 2, an impeller 3 driven in such a way as to rotate by the motor 2, a scroll housing 10 that houses the impeller 3, and an air intake housing 20.

In the present specification, for ease of description, a direction of an axis of rotation Ax of the motor 2 and the impeller 3 is called an "axial direction" or an "up-down direction", and an upper side and a lower side of Fig. 2 and Fig. 3 are called "one axial direction side" or an "upper side" and an "other axial direction side" or a "lower side" respectively. This does not mean, however, that the direction of the axis of rotation Ax is limited to a direction coinciding with a vertical direction when the centrifugal blower is actually installed in a vehicle. Also, in the present specification, a direction of a radius of a circle drawn on a plane perpendicular to the axis of rotation Ax, with an arbitrary point on the axis of rotation Ax as a center, is called a radial direction, and a circumferential direction of the circle is called a peripheral direction or a circumferential direction, unless specifically stated otherwise.

The impeller 3 has a multiple of blades 3a forming a blade cascade aligned in the peripheral direction in an outer peripheral portion of the impeller 3. The impeller 3 is connected to a rotary shaft 2a of the motor 2, is driven in such a way as to rotate around the axis of rotation Ax, and discharges air in a space on a radial direction inner side of the blade cascade of the impeller 3 in a centrifugal direction.

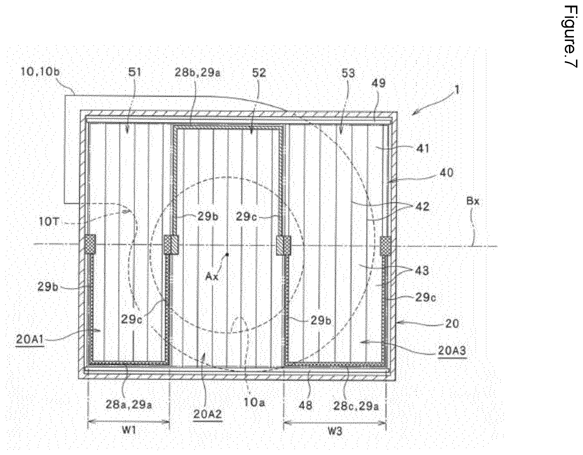

The scroll housing 10 is formed overall in a spiral form looking in the axial direction. The scroll housing 10 has a suction port 10a opening in the axial direction and a discharge port 10b opening in the peripheral direction. When the scroll housing 10 is seen in the axial direction, the discharge port 10b extends in an approximately linear direction of an outer peripheral face of the scroll housing 10 (refer to Fig. 7). The scroll housing 10 sends air drawn in from the suction port 10a out from the discharge port 10b owing to a rotation of the impeller 3. In the example shown, the suction port 10a opens on the axial direction upper side (the one axial direction side).

A partitioning wall 15 that divides an internal space of the scroll housing 10 in the axial direction is provided in the scroll housing 10. The partitioning wall 15 extends toward a radial direction inner side from an outer peripheral wall of the scroll housing 10, and divides a region of the internal space of the scroll housing 10 between an inner peripheral face of the scroll housing 10 and an outer peripheral face of the impeller 3 vertically (in the axial direction). Also, the partitioning wall 15 divides an interior of the discharge port 10b vertically. In this way, the partitioning wall 15 divides the internal space of the scroll housing 10 into a first air flow path 11 and a second air flow path 12.

The first air flow path 11 is positioned on the upper side (the one axial direction side) of the partitioning wall 15. Air flowing along the first air flow path 11 may be sent out to a defroster discharge port and/or a vent discharge port of the vehicle. The second air flow path 12 is positioned on the lower side (the other axial direction side) of the partitioning wall 15. Air flowing along the second air flow path 12 may be sent out to a foot discharge port of the vehicle.

In the example shown in Fig. 1 to Fig. 3, the centrifugal blower 1 is a single suction type of centrifugal blower. The first air flow path 11 and the second air flow path 12 communicate via a second suction port 12a. The second suction port 12a is defined by a radial direction inner side edge portion of the partitioning wall 15. A lower half portion of the impeller 3 is inserted into the second air flow path 12 through the second suction port 12a.

An inner side deflecting member 6 is formed integrated with the impeller 3. The inner side deflecting member 6 is also called a cone portion. The inner side deflecting member 6 is a rotating body in a geometrical sense. In the example shown, the inner side deflecting member 6 has a side peripheral portion 6a connected to a lower end of the impeller 3, and a disk-form central portion 6b. The central portion 6b is coupled to the rotary shaft 2a of the motor 2. The central portion 6b, not necessarily needing to be of a disk-form, may also be of a commonly-known boss form.

A separation cylinder 30 is inserted through the suction port 10a into the scroll housing 10, as shown in Fig. 2 and Fig. 3. The separation cylinder 30 divides a flow of air sucked into the scroll housing 10 from the suction port 10a into a first air flow, which passes through an outer side of the separation cylinder 30, and a second air flow, which passes through an inner side of the separation cylinder 30.

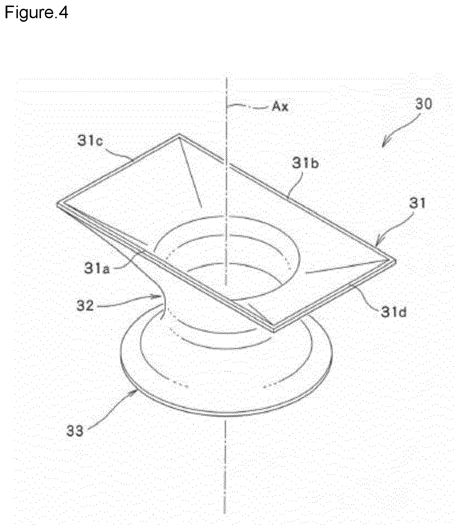

A perspective view of the separation cylinder 30 is shown in Fig. 4. As shown in Fig. 4, the separation cylinder 30 has an entrance side end portion (an upper portion) 31, a trunk portion (a central portion) 32 connected to the entrance side end portion 31 from below, and an exit side end portion (a lower portion) 33 connected to the trunk portion 32 from below. A cross-section of the entrance side end portion 31 perpendicular to the axial direction is approximately rectangular. An upper end of the entrance side end portion 31 has a first edge portion 31a and a second edge portion 31b extending parallel to each other, a third edge portion 31c that connects one end of the first edge portion 31a and one end of the second edge portion 31b, and a fourth edge portion 31d that connects another end of the first edge portion 31a and another end of the second edge portion 31b. A sectional form of the separation cylinder 30 shifts smoothly from a rectangular form to a circular form (or an approximately circular form) while approaching the trunk portion 32 from the entrance side end portion 31. The exit side end portion 33 of the separation cylinder 30 has a flared form whose diameter increases while approaching a lower end.

A whole of the separation cylinder 30 may be molded integrally using resin injection molding. Instead of this, the entrance side end portion 31 of the separation cylinder 30 and the trunk portion 32 and exit side end portion 33 of the separation cylinder 30 may be molded individually, and the two subsequently coupled.

As shown in Fig. 2 and Fig. 3, the entrance side end portion 31 is positioned on an outer side of the scroll housing 10 (farther to the upper side than the suction port 10a) . Also, the trunk portion 32 extends in the axial direction through the radial direction inner side of the suction port 10a and the radial direction inner side of the blade cascade of the impeller 3. The exit side end portion 33 is provided in such a way that the lower end thereof is in approximately the same position as the partitioning wall 15 of the scroll housing 10 in the axial direction.

As heretofore described, the separation cylinder 30 divides a flow of air sucked into the scroll housing 10 into the first air flow, which passes along a first passage 30A on the outer side of the separation cylinder 30, and the second air flow, which passes along a second passage 30B on the inner side of the separation cylinder 30. The first air flow passes through a ring-form region of the suction port 10a farther to the outer side than an outer peripheral face of the separation cylinder 30, and flows to the radial direction inner side of the blade cascade of the impeller 3. The second air flow enters the inner side of the separation cylinder 30 from the upper end of the separation cylinder 30, and flows through the second suction port 12a to the radial direction inner side of the blade cascade of the impeller 3. The exit side end portion 33 of the separation cylinder 30 deflects the first air flow that has flowed in outward in the radial direction, thereby guiding the first air flow to the first air flow path 11, and deflects the second air flow that has flowed in outward in the radial direction, thereby guiding the second air flow to the second air flow path 12.

The air intake housing 20 is disposed on the upper side of the scroll housing 10 in such a way as to cover the suction port 10a. The scroll housing 10 and the air intake housing 20 may be integrally molded, or may be coupled using a method such as screwing, adhesion, or fitting after being fabricated individually. In a preferred embodiment, the separation cylinder 30 is a part separate from the scroll housing 10 and the air intake housing 20, and is supported in a predetermined position by the air intake housing 20.

An internal space of the air intake housing 20 communicates with the suction port 10a of the scroll housing 10. In other words, the suction port 10a opens toward the internal space of the air intake housing 20. As shown in Fig. 1, the air intake housing 20 has an external air inlet 21, which opens approximately forward, and an internal air inlet 22, which opens approximately rearward. The external air inlet 21 is linked to an exit (not shown) of an external air introduction path provided in the vehicle, and can introduce air outside the vehicle into the air intake housing 20. The internal air inlet 22 opens into an interior of the vehicle, and can introduce air inside the vehicle into the air intake housing 20.

The external air inlet 21 has a first external air inlet portion 21a, a second external air inlet portion 21b, and a third external air inlet portion 21c. The first external air inlet portion 21a forms one portion of the external air inlet 21. The second external air inlet portion 21b forms another portion of the external air inlet 21. The third external air inlet portion 21c forms still another portion of the external air inlet 21. The first external air inlet portion 21a, the second external air inlet portion 21b, and the third external air inlet portion 21c are aligned in that order in a direction in which a turning axis Bx of rotary doors 28a, 28b, and 28c, to be described hereafter, extends.

The internal air inlet 22 has a first internal air inlet portion 22a, a second internal air inlet portion 22b, and a third internal air inlet portion 22c. The first internal air inlet portion 22a forms one portion of the internal air inlet 22. The second internal air inlet portion 22b forms another portion of the internal air inlet 22. The third internal air inlet portion 22c forms still another portion of the internal air inlet 22. The first internal air inlet portion 22a, the second internal air inlet portion 22b, and the third internal air inlet portion 22c are aligned in that order in the direction in which the turning axis Bx extends. The first internal air inlet portion 22a opposes the first external air inlet portion 21a. The second internal air inlet portion 22b opposes the second external air inlet portion 21b. The third internal air inlet portion 22c opposes the third external air inlet portion 21c.

The internal space of the air intake housing 20 forms an air passage between the external air inlet 21 and internal air inlet 22 and the scroll housing 10. The internal space of the air intake housing 20 includes an upstream side space 20A, which communicates with the external air inlet 21 and the internal air inlet 22, and a downstream side space 20B, which is connected to a lower side of the upstream side space 20A. A filter 40 to be described hereafter is disposed in the downstream side space 20B. The first rotary door 28a, the second rotary door 28b, and the third rotary door 28c are disposed in the upstream side space 20A. The rotary doors 28a, 28b, and 28c can be caused to rotate around the turning axis Bx, which extends in a left-right direction, by an unshown actuator.

The first rotary door 28a, the second rotary door 28b, and the third rotary door 28c are aligned in that order in the direction in which the turning axis Bx extends. The first rotary door 28a is disposed between the first external air inlet portion 21a and the first internal air inlet portion 22a. The second rotary door 28b is disposed between the second external air inlet portion 21b and the second internal air inlet portion 22b. The third rotary door 28c is disposed between the third external air inlet portion 21c and the third internal air inlet portion 22c.

Each of the rotary doors 28a, 28b, and 28c has an arched wall 29a, which has an arc-form cross-section centered on the turning axis Bx, and a pair of side walls 29b and 29c. The side walls 29b and 29c are of a fan form, and extend between the turning axis Bx and the arched wall 29a along a plane approximately perpendicular to the turning axis Bx. An edge portion of an arc form of the side wall 29b is connected to one edge portion of the arc form of the arched wall 29a. An edge portion of an arc form of the side wall 29c is connected to another edge portion of the arc form of the arched wall 29a.

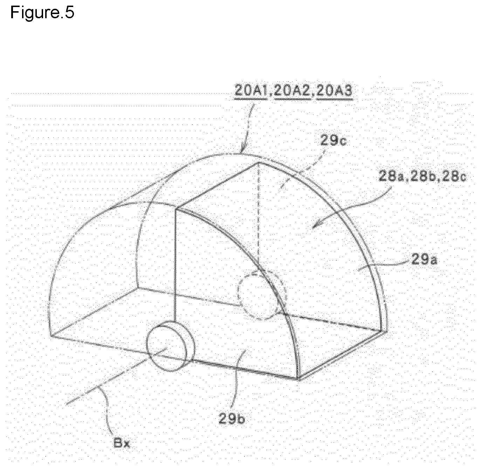

By rotating around the turning axis Bx inside the upstream side space 20A, the first rotary door 28a can operate between a first position, wherein the arched wall 29a closes off the first external air inlet portion 21a, and a second position, wherein the arched wall 29a closes off the first internal air inlet portion 22a. In Fig. 1, the first rotary door 28a is disposed in the second position. This kind of first rotary door 28a can adjust an aperture area of the first external air inlet portion 21a and an aperture area of the first internal air inlet portion 22a. Consequently, the first rotary door 28a can adjust ratios of external air introduced from the first external air inlet portion 21a into the upstream side space 20A and internal air introduced from the first internal air inlet portion 22a into the upstream side space 20A. External air or internal air introduced from the first external air inlet portion 21a or the first internal air inlet portion 22a into the upstream side space 20A passes between the pair of side walls 29b and 29c of the first rotary door 28a, and flows into the downstream side space 20B. An operating range of the first rotary door 28a is a space enclosed by a track of the arched wall 29a of the first rotary door 28a that moves from the first position to the second position (a space enclosed by a two dotted chain line in Fig. 5) . In the present specification, the operating range of the first rotary door 28a is also called a "first space 20A1".

By rotating around the turning axis Bx inside the upstream side space 20A, the second rotary door 28b can operate between a first position, wherein the arched wall 29a closes off the second external air inlet portion 21b, and a second position, wherein the arched wall 29a closes off the second internal air inlet portion 22b. In Fig. 1 and Fig. 2, the second rotary door 28b is disposed in the first position. This kind of second rotary door 28b can adjust an aperture area of the second external air inlet portion 21b and an aperture area of the second internal air inlet portion 22b. Consequently, the second rotary door 28b can adjust ratios of external air introduced from the second external air inlet portion 21b into the upstream side space 20A and internal air introduced from the second internal air inlet portion 22b into the upstream side space 20A. External air or internal air introduced from the second external air inlet portion 21b or the second internal air inlet portion 22b into the upstream side space 20A passes between the pair of side walls 29b and 29c of the second rotary door 28b, and flows into the downstream side space 20B. An operating range of the second rotary door 28b is a space enclosed by a track of the arched wall 29a of the second rotary door 28b that moves from the first position to the second position (a space enclosed by a two dotted chain line in Fig. 5) . In the present specification, the operating range of the second rotary door 28b is also called a "second space 20A2".

By rotating around the turning axis Bx inside the upstream side space 20A, the third rotary door 28c can operate between a first position, wherein the arched wall 29a closes off the third external air inlet portion 21c, and a second position, wherein the arched wall 29a closes off the third internal air inlet portion 22c. In Fig. 1, the third rotary door 28c is disposed in the second position. This kind of third rotary door 28c can adjust an aperture area of the third external air inlet portion 21c and an aperture area of the third internal air inlet portion 22c. Consequently, the third rotary door 28c can adjust ratios of external air introduced from the third external air inlet portion 21c into the upstream side space 20A and internal air introduced from the third internal air inlet portion 22c into the upstream side space 20A. External air or internal air introduced from the third external air inlet portion 21c or the third internal air inlet portion 22c into the upstream side space 20A passes between the pair of side walls 29b and 29c of the third rotary door 28c, and flows into the downstream side space 20B. An operating range of the third rotary door 28c is a space enclosed by a track of the arched wall 29a of the third rotary door 28c that moves from the first position to the second position (a space enclosed by a two dotted chain line in Fig. 5) . In the present specification, the operating range of the third rotary door 28c is also called a "third space 20A3".

The side walls 29b and 29c of the rotary doors 28a, 28b, and 28c and the separation cylinder 30 are disposed in the following way with respect to each other. That is, the side walls 29b and 29c of the first rotary door 28a and the third rotary door 28c and the separation cylinder 30 are disposed with respect to each other in such a way that practically all air introduced from the first external air inlet portion 21a or the first internal air inlet portion 22a into the air intake housing 20, together with air introduced from the third external air inlet portion 21c or the third internal air inlet portion 22c into the air intake housing 20, passes along the first passage 30A on the outer side of the separation cylinder 30. Also, the side walls 29b and 29c of the second rotary door 28b and the separation cylinder 30 are disposed with respect to each other in such a way that practically all air introduced from the second external air inlet portion 21b or the second internal air inlet portion 22b into the air intake housing 20 passes along the second passage 30B on the inner side of the separation cylinder 30. More specifically, the side walls 29b and 29c of each of the rotary doors 28a, 28b, and 28c are parallel to planes extending in the direction in which the first edge portion 31a and the second edge portion 31b of the entrance side end portion 31 of the separation cylinder 30 extend, and the direction in which the axis of rotation Ax extends. Also, the neighboring side walls 29c and 29b of the first rotary door 28a and the second rotary door 28b and the first edge portion 31a of the separation cylinder 30 are aligned in a direction of flow (approximately the axial direction) of air flowing through the internal space of the air intake housing 20. Also, the neighboring side walls 29b and 29c of the second rotary door 28b and the third rotary door 28c and the second edge portion 31b of the separation cylinder 30 are aligned in the direction of flow of air flowing through the internal space of the air intake housing 20.

Next, the filter 40 will be described, referring to Fig. 2, Fig. 3, Fig. 6, and Fig. 7. As heretofore described, the filter 40 is disposed in the downstream side space 20B of the air intake housing 20 in such a way that a filtering face of the filter 40 intersects air flowing through the downstream side space 20B. The filter 40 is provided in order to remove contaminants such as dust or particles, or unusual smells, from air that has flowed into the internal space of the air intake housing 20. The filter 40 is held between the rotary doors 28a, 28b, and 28c and the entrance side end portion 31 of the separation cylinder 30 by a slot or a rail (not shown) provided inside the air intake housing 20. The filter 40 is inserted into the internal space of the air intake housing 20 through an insertion port 20M (refer to Fig. 3) provided in the air intake housing 20.

The filter 40 includes a filtering medium 41, which captures contaminants in air that has flowed into the internal space of the air intake housing 20, and a pair of end plates 48 and 49 that hold the filtering medium 41. The filtering medium 41 is formed of, for example, a non-woven fabric. A resin fiber such as polypropylene, polyester, or nylon is used as a material of the filtering medium 41. Also, the end plates 48 and 49 are formed of, for example, polyester or polypropylene.

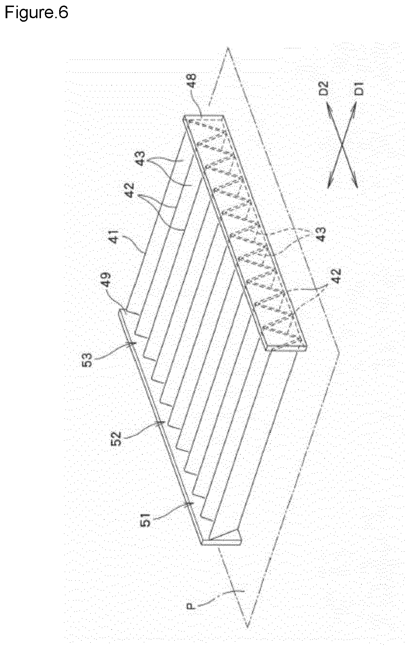

In the example shown, the filtering medium 41 is of a pleated form (refer to Fig. 3 and Fig. 6) . More specifically, mountain folds 42 and valley folds 42 are formed alternately in the filtering medium 41. The filtering medium 41 has a multiple of sections 43 segregated by the mountain folds 42 and the valley folds 42. The sections 43 form the filtering face of the filter 40. Hereafter, a direction D1 in which the mountain folds 42 and the valley folds 42 extend is also called a "first direction D1". Also, a direction D2 in which the mountain folds 42 and the valley folds 42 are aligned is also called a "second direction D2". The filter 40 is such that a virtual plane P extending in the first direction D1 and the second direction D2 is disposed in such a way as to intercept air flowing through the downstream side space 20B. In the example shown, the filter 40 is disposed in such a way that the virtual plane P thereof is perpendicular to the axis of rotation Ax. Also, the filter 40 is disposed in such a way that the first direction D1 thereof corresponds to a direction in which the first edge portion 31a and the second edge portion 31b of the entrance side end portion 31 of the separation cylinder 30 extend.

In the example shown in Fig. 3, a distance L between neighboring folds 42 (a width of each section 43) is uniform in the filtering medium 41. Because of this, areas of the multiple of sections 43 are equal to each other. Furthermore, an interval G between folds 42 neighboring in the second direction D2 (a pleat form pitch) in the filtering medium 41 folded into a pleated form is uniform inside the filtering medium 41.

The filtering medium 41 includes a first region 51, a second region 52, and a third region 53. The first region 51, the second region 52, and the third region 53 are aligned in that order in the second direction D2. The first region 51 opposes the first space 20A1, as shown in Fig. 3. Also, the first region 51 coincides with a tongue portion 10T of the scroll housing 10 when looking in the axial direction, as shown in Fig. 7. The tongue portion 10T is a portion at a winding start of the scroll housing 10, which is of a spiral form. The second region 52 opposes the second space 20A2, as shown in Fig. 3. Also, the second region 52 includes the axis of rotation Ax when looking in the axial direction, as shown in Fig. 7. The third region 53 opposes the third space 20A3, as shown in Fig. 3. Also, the third region 53 is positioned on a side of the second region 52 opposite to that of the first region 51.

The end plates 48 and 49 are fixed at either end portion of the filtering medium 41 in the first direction D1, and maintain the filtering medium 41 in a pleated form. Each of the end plates 48 and 49 is formed of a single element with no joint portion in the second direction D2. This means that, compared with a case wherein each of the end plates 48 and 49 is formed of a multiple of elements having a joint portion in the second direction D2, productivity of the filter 40 can be increased, and strength of the filter 40 can be increased.

Next, an operation of the centrifugal blower 1 shown in Fig. 1 to Fig. 3 will be described.

In a first operating mode of the centrifugal blower 1, the first to third internal air inlet portions 22a, 22b, and 22c are closed by the rotary doors 28a, 28b, and 28c, and the first to third external air inlet portions 21a, 21b, and 21c are opened. This state is not shown in the drawings. In this case, external air introduced from the first external air inlet portion 21a and the third external air inlet portion 21c into the first space 20A1 and the third space 20A3 passes through the first region 51 and the third region 53 respectively of the filter 40, and forms the first air flow that flows through the first passage 30A on the outer side of the separation cylinder 30 into an upper half portion of the blade cascade of the impeller 3. Also, external air introduced from the second external air inlet portion 21b into the second space 20A2 passes through the second region 52 of the filter 40, and forms the second air flow that flows through the second passage 30B on the inner side of the separation cylinder 30 into a lower half portion of the blade cascade of the impeller 3. The first operating mode may also be called an external air mode.

In a second operating mode, the first internal air inlet portion 22a, the second external air inlet portion 21b, and the third internal air inlet portion 22c are closed by the rotary doors 28a, 28b, and 28c, and the first external air inlet portion 21a, the second internal air inlet portion 22b, and the third external air inlet portion 21c are opened. This state is shown in Fig. 1 to Fig. 3. In this case, external air introduced from the first external air inlet portion 21a and the third external air inlet portion 21c into the first space 20A1 and the third space 20A3 passes through the first region 51 and the third region 53 respectively of the filter 40, and forms the first air flow that flows through the first passage 30A on the outer side of the separation cylinder 30 into the upper half portion of the blade cascade of the impeller 3. Also, internal air introduced from the second internal air inlet portion 22b into the second space 20A2 passes through the second region 52 of the filter 40, and forms the second air flow that flows through the second passage 30B on the inner side of the separation cylinder 30 into the lower half portion of the blade cascade of the impeller 3. The second operating mode may also be called an internal and external air two layer flow mode.

The second operating mode (the internal and external air two layer flow mode) is used when, for example, carrying out driving in a defrost/foot mode. In this case, external air with a relatively small amount of moisture is discharged from a defrost discharge port in a vehicle cabin toward a windshield (not shown) of the vehicle, and internal air with a relatively large amount of moisture is discharged from a foot discharge port (not shown) in the vehicle cabin toward the feet of an occupant.

In a third operating mode, the first to third external air inlet portions 21a, 21b, and 21c are closed by the rotary doors 28a, 28b, and 28c, and the first to third internal air inlet portions 22a, 22b, and 22c are opened. This state is not shown in the drawings. In this case, internal air introduced from the first internal air inlet portion 22a and the third internal air inlet portion 22c into the first space 20A1 and the third space 20A3 passes through the first region 51 and the third region 53 respectively of the filter 40, and forms the first air flow that flows through the first passage 30A on the outer side of the separation cylinder 30 into the upper half portion of the blade cascade of the impeller 3. Also, internal air introduced from the second internal air inlet portion 22b into the second space 20A2 passes through the second region 52 of the filter 40, and forms the second air flow that flows through the second passage 30B on the inner side of the separation cylinder 30 into the lower half portion of the blade cascade of the impeller 3. The third operating mode may also be called an internal air mode.

Herein, improvement of an air blowing efficiency of a centrifugal blower having this kind of configuration is being demanded. With consideration to this kind of need, the centrifugal blower 1 of the present embodiment is devised in such a way as to improve the air blowing efficiency.

Firstly, in general, a flow rate of air that may be drawn in from a suction port in a scroll housing of a spiral form is smallest in a vicinity of a tongue portion of the scroll housing, and becomes larger as a winding angle of the scroll housing having the tongue portion as a reference increases. This means that when a filter is disposed opposing the suction port, an amount of air drawn toward a third region of the filter is greater than an amount of air drawn toward a first region of the filter. This kind of centrifugal blower is such that when a filtering face area of the first region and a filtering face area of the third region are equal, ventilation resistance of air passing through the third region is higher than ventilation resistance of air passing through the first region. This causes air blowing efficiency of the centrifugal blower to be lost.

With consideration to this kind of point, the centrifugal blower 1 of the present embodiment is configured in such a way that a filtering face area of the third region 53 is greater than a filtering face area of the first region 51. Owing to the filtering face area of the third region 53 being greater than the filtering face area of the first region 51, a rise in ventilation resistance of air passing through the third region 53 can be restricted in comparison with a case wherein the filtering face area of the first region 51 and the filtering face area of the third region 53 are equal. As a result of this, the air blowing efficiency of the centrifugal blower 1 can be improved.

The example shown in Fig. 3 and Fig. 7 is such that when the filter 40 is projected vertically in a projection plane that is perpendicular to the axial direction, an area of a region covered by the third region 53 is greater than an area of a region covered by the first region 51 in the projection plane. Specifically, as shown in Fig. 7, a width W3 of the third rotary door 28c in the direction in which the turning axis Bx extends is greater than a width W1 of the first rotary door 28a in the direction in which the turning axis Bx extends. Consequently, a width W3 of the third space 20A3 in the direction in which the turning axis Bx extends is greater than a width W1 of the first space 20A1 in the direction in which the turning axis Bx extends. Also, in the example shown in Fig. 3, as heretofore described, the interval G between neighboring folds 42 (the pleat form pitch) is uniform in the filtering medium 41. Because of this, the number of sections 43 in the third region 53 is greater than the number of sections 43 in the first region 51. In the example shown in Fig. 3, the first region 51 includes six sections 43, while the third region 53 includes eight sections 43. As a result of this, the filtering face area of the third region 53 is greater than the filtering face area of the first region 51.

In the heretofore described first embodiment, the vehicle-use centrifugal blower 1 includes the motor 2, the impeller 3, the scroll housing 10, the partitioning wall 15, the separation cylinder 30, the air intake housing 20, the filter 40, the first rotary door 28a, the second rotary door 28b, and the third rotary door 28c.

The impeller 3 has the multiple of blades 3a forming a peripheral direction blade cascade, is driven by the motor 2 in such a way as to rotate around the axis of rotation Ax that extends in the axial direction, and discharges air in the space on the radial direction inner side of the blade cascade in the centrifugal direction.

The scroll housing 10 is the scroll housing 10 that houses the impeller 3, has the suction port 10a opening in the axial direction and the discharge port 10b opening in the peripheral direction, and sends air drawn in from the suction port 10a out from the discharge port 10b owing to a rotation of the impeller 3.

The partitioning wall 15 divides the internal space of the scroll housing 10 in the axial direction.

The separation cylinder 30 is inserted into the scroll housing 10, and divides a flow of air sucked into the scroll housing 10 from the suction port 10a into the first air flow, which passes through the outer side of the separation cylinder 30, and the second air flow, which passes through the inner side of the separation cylinder 30.

The air intake housing 20 is connected to the scroll housing 10, and has the external air inlet 21 for taking in air outside the vehicle, the internal air inlet 22 for taking in air inside the vehicle, and the internal space that forms an air passage between the external air inlet 21 and internal air inlet 22 and the scroll housing 10.

The filter 40 is disposed in the internal space of the air intake housing 20 in such a way that the filtering face intersects air flowing through the internal space.

The first rotary door 28a operates between the external air inlet 21 and internal air inlet 22 and the filter 40, and adjusts ratios of external air introduced from the first external air inlet portion 21a, which is one portion of the external air inlet 21, into the internal space and internal air introduced from the first internal air inlet portion 22a, which is one portion of the internal air inlet 22, into the internal space.

The second rotary door 28b operates between the external air inlet 21 and internal air inlet 22 and the filter 40, and adjusts ratios of external air introduced from the second external air inlet portion 21b, which is another portion of the external air inlet 21, into the internal space and internal air introduced from the second internal air inlet portion 22b, which is another portion of the internal air inlet 22, into the internal space.

The third rotary door 28c operates between the external air inlet 21 and internal air inlet 22 and the filter 40, and adjusts ratios of external air introduced from the third external air inlet portion 21c, which is still another portion of the external air inlet 21, into the internal space and internal air introduced from the third internal air inlet portion 22c, which is still another portion of the internal air inlet 22, into the internal space.

The first rotary door 28a, the second rotary door 28b, and the third rotary door 28c are aligned in that order.

The internal space of the air intake housing 20 includes the first space 20A1, which is the operating range of the first rotary door 28a, the second space 20A2, which is a space neighboring the first space 20A1 and is the operating range of the second rotary door 28b, and the third space 20A3, which is a space neighboring the second space 20A2 and is the operating range of the third rotary door 28c.

The filter 40 has the first region 51 opposing the first space 20A1, the second region 52 opposing the second space 20A2, and the third region 53 opposing the third space 20A3.

The first region 51 coincides with the tongue portion 10T of the scroll housing 10 when looking in the axial direction.

The second region 52 includes the axis of rotation Ax when looking in the axial direction.

The third region 53 is positioned on the side of the second region 52 opposite to that of the first region 51.

The filtering face area of the third region 53 is greater than the filtering face area of the first region 51.

According to this kind of centrifugal blower 1, more air is drawn toward the third region 53 of the filter 40 than toward the first region 51 of the filter 40, but as the filtering face area of the third region 53 is greater than the filtering face area of the first region 51, a rise in the ventilation resistance of air passing through the third region 53 can be restricted. As a result of this, the air blowing efficiency of the centrifugal blower 1 can be improved.

The first embodiment is such that when the filter 40 is projected vertically in a projection plane that is perpendicular to the axial direction, the area of the region covered by the third region 53 is greater than the area of the region covered by the first region 51 in the projection plane. Because of this, the filtering face area of the third region 53 is greater than the filtering face area of the first region 51.

More specifically, in the first embodiment, the filter 40 includes the filtering medium 41 wherein the multiple of folds 42 are formed in such a way that the filtering medium 41 is of a pleated form, and the filtering medium 41 is divided into the multiple of sections 43 by the multiple of folds 42. The interval G between neighboring folds 42 and 42 (the pleat form pitch) in the first region 51 and the interval G between neighboring folds 42 and 42 in the third region 53 are equal. As a result of this, the number of sections 43 in the third region 53 is greater than the number of sections 43 in the first region 51. Because of this, the filtering face area of the third region 53 is greater than the filtering face area of the first region 51.

### Second Embodiment

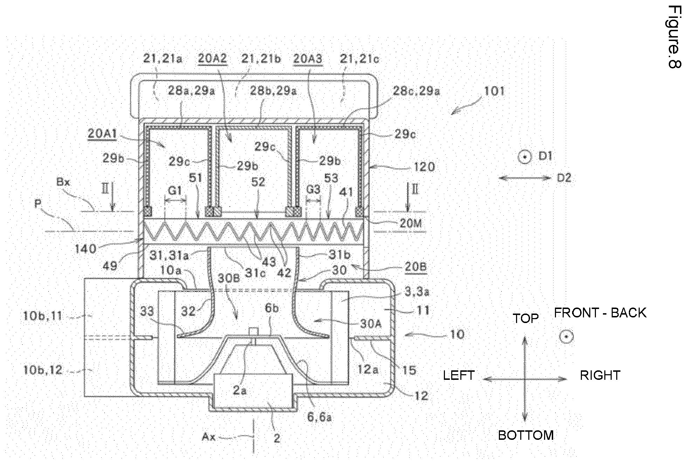

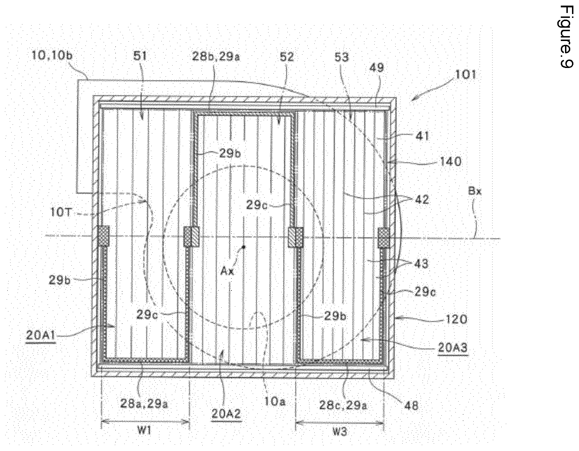

Next, a second embodiment will be described, with reference to Fig. 8 and Fig. 9. Fig. 8 is a drawing showing a meridional cross-section of a centrifugal blower 101 according to the second embodiment. Fig. 9 is a sectional view of the centrifugal blower 101 along a II-II line of Fig. 8. The centrifugal blower 101 shown in Fig. 8 differs from the centrifugal blower 1 shown in Fig. 1 to Fig. 3 in that the area of the region covered by the first region 51 and the area of the region covered by the third region 53 in the projection plane are equal. Also, the centrifugal blower 101 and the centrifugal blower 1 differ in that the interval G between neighboring folds 42 and 42 of a filter 140 differs between the first region 51 and the third region 53. Other points are approximately the same as in the case of the centrifugal blower 1 shown in Fig. 1 to Fig. 3. In the second embodiment shown in Fig. 8 and Fig. 9, the same reference sign is allotted to a portion the same as in the case of the centrifugal blower 1 shown in Fig. 1 to Fig. 3, and a detailed description is omitted.

As heretofore described, the centrifugal blower 101 shown in Fig. 8 and Fig. 9 is such that when the filter 140 is projected vertically in a projection plane that is perpendicular to the axial direction, the area of the region covered by the first region 51 and the area of the region covered by the third region 53 in the projection plane are equal. Specifically, the width W1 of the first rotary door 28a and the width W3 of the third rotary door 28c are equal. Consequently, the width W1 of the first space 20A1 and the width W3 of the third space 20A3 are equal. Meanwhile, an interval (an interval in the second direction D2) G3 between neighboring folds 42 and 42 in the third region 53 is narrower than an interval (an interval in the second direction D2) G1 between neighboring folds 42 and 42 in the first region 51 in the filtering medium 41 folded into a pleated form. Because of this, the number of sections 43 in the third region 53 is greater than the number of sections 43 in the first region 51. In the example shown in Fig. 8, the first region 51 includes six sections 43, while the third region 53 includes ten sections 43. As a result of this, the filtering face area of the third region 53 is greater than the filtering face area of the first region 51.

According to this kind of centrifugal blower 101 too, a rise in ventilation resistance in the third region 53 can be restricted, and a flow rate of air passing through the third region 53 can be increased. Further, an air blowing efficiency of the centrifugal blower 101 can be improved. Furthermore, there is no need for the width W3 of the third space 20A3 to be greater than the width W1 of the first space 20A1, because of which an increase in a dimension of the air intake housing 20 in the second direction D2 can be restricted.

In the heretofore described second embodiment, the filter 140 includes the filtering medium 41 wherein the multiple of folds 42 are formed in such a way that the filtering medium 41 is of a pleated form, and the filtering medium 41 is divided into the multiple of sections 43 by the multiple of folds 42. The interval G3 between neighboring folds 42 and 42 in the third region 53 is narrower than the interval G1 between neighboring folds 42 and 42 in the first region 51. Because of this, the number of sections 43 in the third region 53 is greater than the number of sections 43 in the first region 51. Because of this, the filtering face area of the third region 53 can be greater than the filtering face area of the first region 51, and a rise in the ventilation resistance of air passing through the third region 53 can be restricted. As a result of this, the air blowing efficiency of the centrifugal blower 101 can be improved. Furthermore, as the interval G3 between neighboring folds 42 and 42 in the third region 53 is narrower than the interval G1 between neighboring folds 42 and 42 in the first region 51, an increase in the dimension of the air intake housing 20 caused by the filtering face area of the third region 53 being greater than the filtering face area of the first region 51 can be restricted.

### Third Embodiment

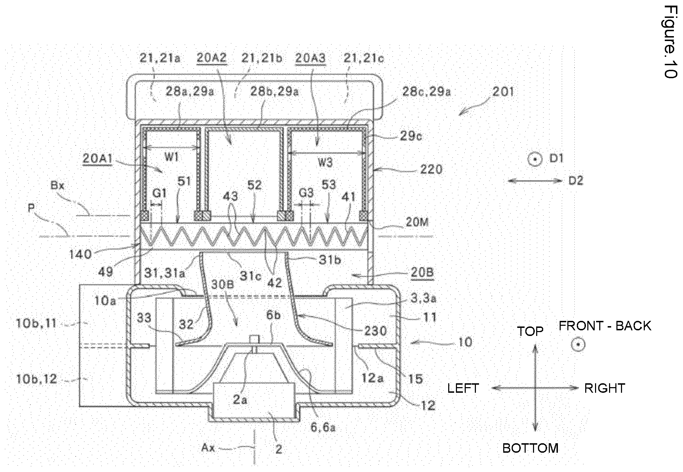

Next, a third embodiment will be described, with reference to Fig. 10 . Fig. 10 is a drawing showing a meridional cross-section of a centrifugal blower 201 according to the third embodiment. The centrifugal blower 201 shown in Fig. 10 differs from the centrifugal blower 101 shown in Fig. 8 and Fig. 9 in that the area of the region covered by the third region 53 is greater than the area of the region covered by the first region 51 in the projection plane. Other points are approximately the same as in the case of the centrifugal blower 101 shown in Fig. 8 and Fig. 9. In the third embodiment shown in Fig. 10, the same reference sign is allotted to a portion the same as in the case of the centrifugal blower 101 shown in Fig. 8 and Fig. 9, and a detailed description is omitted.

As heretofore described, the centrifugal blower 201 shown in Fig. 10 is such that when the filter 140 is projected vertically in a projection plane that is perpendicular to the axial direction, the area of the region covered by the third region 53 is greater than the area of the region covered by the first region 51 in the projection plane. Specifically, the width W3 of the third rotary door 28c is greater than the width W1 of the first rotary door 28a. Consequently, the width W3 of the third space 20A3 is greater than the width W1 of the first space 20A1. Furthermore, the interval G3 between neighboring folds 42 and 42 in the third region 53 is narrower than the interval G1 between neighboring folds 42 and 42 in the first region 51 in the filtering medium 41 folded into a pleated form. Because of this, the number of sections 43 in the third region 53 is greater than the number of sections 43 in the first region 51. In the example shown in Fig. 10, the first region 51 includes five sections 43, while the third region 53 includes ten sections 43. As a result of this, the filtering face area of the third region 53 is greater than the filtering face area of the first region 51.

According to this kind of centrifugal blower 201 too, a rise in ventilation resistance in the third region 53 can be restricted. As a result of this, an air blowing efficiency of the centrifugal blower 201 can be improved. Furthermore, as the interval G3 between neighboring folds 42 and 42 in the third region 53 is narrower than the interval G1 between neighboring folds 42 and 42 in the first region 51, an increase in the dimension of the air intake housing 20 in the second direction D2 can be restricted.

In the example shown in Fig. 10, a central position in the second space 20A2 in the second direction D2 deviates from a central position in an air intake housing 220 in the second direction D2. In this case, it is sufficient that a separation cylinder 230 is formed in such a way that the entrance side end portion 31 thereof opposes the second space 20A2, as shown in Fig. 10. Because of this, air taken into the second space 20A2 and air taken into the first space 20A1 and the third space 20A3 can be separated by the separation cylinder 230, while restricting an increase in a dimension of the air intake housing 220 in the second direction D2.

### Fourth Embodiment

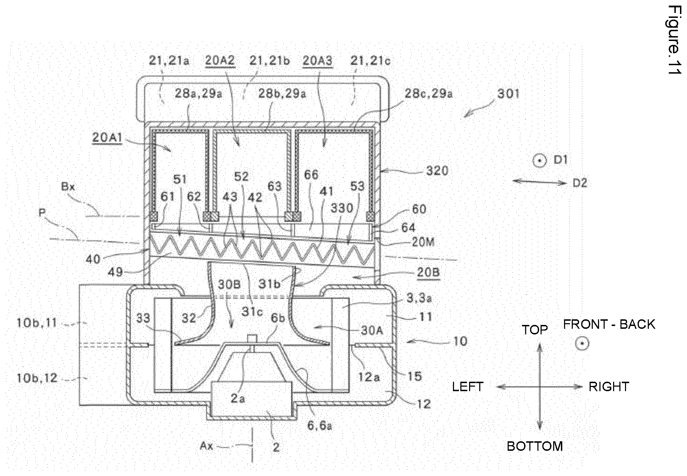

Next, a fourth embodiment will be described, with reference to Fig. 11. Fig. 11 is a drawing showing a meridional cross-section of a centrifugal blower 301 according to the fourth embodiment. The centrifugal blower 301 shown in Fig. 11 differs from the centrifugal blower 1 shown in Fig. 1 to Fig. 3 in that the filter 40 is inclined with respect to the scroll housing 10. Other points are approximately the same as in the case of the centrifugal blower 1 shown in Fig. 1 to Fig. 3. In the fourth embodiment shown in Fig. 11, the same reference sign is allotted to a portion the same as in the case of the centrifugal blower 1 shown in Fig. 1 to Fig. 3, and a detailed description is omitted.

As heretofore described, the centrifugal blower 301 shown in Fig. 11 is such that the filter 40 is inclined with respect to the scroll housing 10. In other words, the virtual plane P of the filter 40 is inclined with respect to a plane that is perpendicular to the axis of rotation Ax. Further, a distance between the suction port 10a of the scroll housing 10 and the third region 53 is shorter than a distance between the suction port 10a and the first region 51.

Herein, in general, an air conditioning unit of an air conditioning device is connected to a discharge port of a centrifugal blower. This means that when an insertion port for inserting a filter into an internal space of an air intake housing is provided on the discharge port side of the centrifugal blower, it is difficult to remove or insert the filter from or into the air intake housing in a state wherein the centrifugal blower is installed in the air conditioning device. Specifically, it is difficult to remove or insert the filter from or into the air intake housing when the insertion port is provided in a wall portion of the air intake housing that neighbors a first region of the filter in the second direction D2. Because of this, the insertion port is provided in a wall portion of the air intake housing that neighbors a third region of the filter in the second direction D2, or in a wall portion that neighbors the filter in the first direction D1. Also, in general, various devices exist above (on the one axial direction side of) the centrifugal blower in a state wherein the air conditioning device is installed in a vehicle. This means that when the insertion port is provided in the wall portion that neighbors the third region of the filter in the second direction D2, it is easy to remove or insert the filter from or into the air intake housing, even in a state wherein the air conditioning device is installed in a vehicle, provided that the filter can be pulled diagonally downward out of the air intake housing, or that the filter can be inserted from diagonally below into the air intake housing.

This means that when the filter 40 is installed in an air intake housing 320 in such a way that the distance between the suction port 10a of the scroll housing 10 and the third region 53 is shorter than the distance between the suction port 10a and the first region 51, as shown in Fig. 11, it is easy to remove or insert the filter 40 from or into the air intake housing 320.

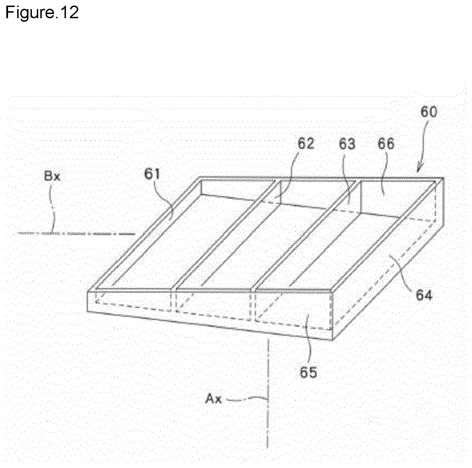

In the example shown in Fig. 11, a partitioning wall structure 60 is disposed in the upstream side space 20A of the air intake housing 320. The partitioning wall structure 60 includes wall portions 61, 62, 63, and 64 extending along a plane perpendicular to the turning axis Bx, as shown in Fig. 11 and Fig. 12. The wall portions 61, 62, 63, and 64 are disposed separated from each other, in that order, in the direction in which the turning axis Bx extends. The wall portions 61, 62, 63, and 64 are disposed between a pair of wall portions 65 and 66 that extend along planes parallel to the turning axis Bx and the axis of rotation Ax, and are connected to the wall portions 65 and 66. As is understood from Fig. 11, the wall portions 62 and 63 are disposed in such a way that lower ends thereof oppose the first edge portion 31a and the second edge portion 31b of the entrance side end portion 31 of a separation cylinder 330. The wall portion 61 is disposed in such a way as to oppose one end in the second direction D2 of the filter 40. The wall portion 64 is disposed in such a way as to oppose another end in the second direction D2 of the filter 40. The wall portion 65 is disposed in such a way as to oppose one end in the first direction D1 of the filter 40. The wall portion 66 is disposed in such a way as to oppose another end in the first direction D1 of the filter 40.

According to this kind of partitioning wall structure 60, concern that air drawn into the second space 20A2 will flow into the first region 51 or the third region 53 of the filter 40 from between the second space 20A2 and the filter 40 is reduced. Also, concern that air drawn into the first space 20A1 or the third space 20A3 will flow into the second region 52 of the filter 40 from between the second space 20A2 and the filter 40 is reduced. This means that concern that internal air and external air flowing into the filter 40 will mix with each other when the centrifugal blower 301 is operated in the internal and external air two layer flow mode is reduced.

In the example shown in Fig. 11, an aperture of the entrance side end portion 31 of the separation cylinder 330 is inclined along the virtual plane P of the filter 40. Because of this, concern that air that has passed through the second region 52 of the filter 40 will flow out to an outer side of the separation cylinder 330 from between the filter 40 and the entrance side end portion 31 of the separation cylinder 330 is reduced. Also, concern that air that has passed through the first region 51 and the third region 53 of the filter 40 will flow into an inner side of the separation cylinder 330 from between the filter 40 and the entrance side end portion 31 of the separation cylinder 330 is reduced. This means that concern that internal air and external air that have passed through the filter 40 will mix with each other when the centrifugal blower 301 is operated in the internal and external air two layer flow mode is reduced.

In the heretofore described fourth embodiment, the distance between the suction port 10a of the scroll housing 10 and the third region 53 is shorter than the distance between the suction port 10a and the first region 51. Because of this, it is easy to remove or insert the filter 40 from or into the air intake housing 320.

### Modification

Heretofore, the first to fourth embodiments have been described while referring to specific examples, but it is not intended that the aforementioned specific examples limit the first to fourth embodiments. The heretofore described first to fourth embodiments can be implemented by various other specific examples, and various kinds of omission, replacement, change, addition, and the like can be carried out without departing from the scope of the invention.

For example, all of the heretofore described centrifugal blowers 1, 101, 201, and 301 are such that the first space 20A1, the second space 20A2, and the third space 20A3 may be separated by two partitioning walls that extend along a plane perpendicular to the turning axis Bx in the upstream side space 20A of the air intake housings 20, 120, 220, and 320. In this case, the rotary doors 28a, 28b, and 28c need not have the side walls 29b and 29c. Also, in this case, the two partitioning walls separating the spaces 20A1, 20A2, and 20A3 are disposed in such a way as to be aligned with the first edge portion 31a and the second edge portion 31b of the entrance side end portion 31 of the separation cylinders 30, 230, and 330 in the direction of flow of air that passes through the upstream side space 20A of the air intake housing 20. Because of this, air introduced into the second space 20A2 can be guided to the inner side of the separation cylinders 30, 230, and 330, and air introduced into the first space 20A1 and the third space 20A3 can be guided to the outer side of the separation cylinders 30, 230, and 330.

Also, the centrifugal blower 1 shown in Fig. 1 to Fig. 3 and the centrifugal blower 301 shown in Fig. 11 are such that the filtering medium 41 need not be of a pleated form. More specifically, a folding method such that bent portions having a mountain-like cross-section are continuously disposed side-by-side in a planar waveform may be employed, as disclosed in Fig. 1 of Patent Document (JP-UM-B-2-048110).

Also, the centrifugal blower 1 shown in Fig. 1 to Fig. 3 and the centrifugal blower 301 shown in Fig. 11 are such that a central position in the second space 20A2 in the second direction D2 may deviate from a central position in the air intake housings 20 and 320 in the second direction D2. In this case, the separation cylinders 30 and 330 are formed in such a way that the entrance side end portion 31 thereof opposes the second space 20A2, in the same way as in the case of the centrifugal blower 201 shown in Fig. 10. Because of this, air drawn into the second space 20A2 and air drawn into the first space 20A1 and the third space 20A3 can be separated by the separation cylinders 30 and 330, while restricting an increase in a dimension of the air intake housings 20 and 320 in the second direction D2.

A vehicle-use centrifugal blower according to the invention can be manufactured industrially, and can be a target of a commercial transaction, because of which the centrifugal blower has economic value, and has industrial applicability. Description of Reference Numerals and Signs

1, 101, 201, 301: centrifugal blower
2: motor
3: impeller
10: scroll housing
10a: suction port
10b: discharge port
10T: tongue portion
20, 120, 220, 320: air intake housing
20A1: first space
20A2: second space
20A3: third space
21: external air inlet
21a: first external air inlet portion
21b: second external air inlet portion
21c: third external air inlet portion
22: internal air inlet
22a: first internal air inlet portion
22b: second internal air inlet portion
22c: third internal air inlet portion
28a: first rotary door
28b: second rotary door
28c: third rotary door
30, 230, 330: separation cylinder
31: entrance side edge portion
40, 140: filter
41: filtering medium
42: fold
43: section
51: first region
52: second region
53: third region
Ax: axis of rotation
P: virtual plane

## Claims

1. A vehicle-use centrifugal blower (1, 101, 201, 301), comprising:
a motor (2);
an impeller (3) that has a multiple of blades (3a) forming a peripheral direction blade cascade, is driven by the motor (2) in such a way as to rotate around an axis of rotation (Ax) that extends in an axial direction, and discharges air in a space on a radial direction inner side of the blade cascade in a centrifugal direction;
a scroll housing (10) that houses the impeller (3), has a suction port (10a) opening in the axial direction and a discharge port (10b) opening in the peripheral direction, and sends air drawn in from the suction port (10a) out from the discharge port (10b) owing to a rotation of the impeller (3);
a partitioning wall (15) that divides an internal space of the scroll housing (10) in the axial direction;
a separation cylinder (30, 230, 330) inserted into the scroll housing (10), which divides a flow of air sucked into the scroll housing (10) from the suction port (10a) into a first air flow that passes through an outer side of the separation cylinder (30, 230, 330) and a second air flow that passes through an inner side of the separation cylinder (30, 230, 330) ;
an air intake housing (20, 120, 220, 320), which is connected to the scroll housing (10), and has an external air inlet (21) for taking in air outside a vehicle, an internal air inlet (22) for taking in air inside the vehicle, and an internal space that forms an air passage between the external air inlet (21) and internal air inlet (22) and the scroll housing (10);
a filter (40, 140) disposed in the internal space of the air intake housing (20, 120, 220, 320) in such a way that a filtering face intersects air flowing through the internal space;
a first rotary door (28a), which operates between the external air inlet (21) and internal air inlet (22) and the filter (40, 140) and adjusts ratios of external air introduced from a first external air inlet portion (21a), which is one portion of the external air inlet (21), into the internal space and internal air introduced from a first internal air inlet portion (22a), which is one portion of the internal air inlet (22), into the internal space;
a second rotary door (28b), which operates between the external air inlet (21) and internal air inlet (22) and the filter (40, 140) and adjusts ratios of external air introduced from a second external air inlet portion (21b), which is another portion of the external air inlet (21), into the internal space and internal air introduced from a second internal air inlet portion (22b), which is another portion of the internal air inlet (22), into the internal space; and
a third rotary door (28c), which operates between the external air inlet (21) and internal air inlet (22) and the filter (40, 140) and adjusts ratios of external air introduced from a third external air inlet portion (21c), which is still another portion of the external air inlet (21), into the internal space and internal air introduced from a third internal air inlet portion (22c), which is still another portion of the internal air inlet (22), into the internal space, wherein
the first rotary door (28a), the second rotary door (28b), and the third rotary door (28c) are aligned in that order,
the internal space of the air intake housing (20, 120, 220, 320) includes a first space (20A1), which is an operating range of the first rotary door (28a), a second space (20A2), which is a space neighboring the first space (20A1) and is an operating range of the second rotary door (28b), and a third space (20A3), which is a space neighboring the second space (20A2) and is an operating range of the third rotary door (28c),
the filter (40, 140) has a first region (51) opposing the first space (20A1), a second region (52) opposing the second space (20A2), and a third region (53) opposing the third space (20A3),
the first region (51) coincides with a tongue portion (10T) of the scroll housing (10) when looking in the axial direction,
the second region (52) includes the axis of rotation (Ax) when looking in the axial direction,
the third region (53) is positioned on a side of the second region (52) opposite to that of the first region (51), and
the vehicle-use centrifugal blower being **characterised in that** a filtering face area of the third region (53) is greater than a filtering face area of the first region (51).

2. The centrifugal blower (1, 101, 201, 301) according to claim 1, wherein, when the filter (40) is projected vertically in a projection plane that is perpendicular to the axial direction, an area of a region covered by the third region (53) is greater than an area of a region covered by the first region (51) in the projection plane.

3. The centrifugal blower (1, 101, 201, 301) according to claim 1 or 2, wherein the filter (40) includes a filtering medium (41) wherein a multiple of folds (42) are formed in such a way that the filtering medium (41) is of a pleated form, the filtering medium (41) is divided into a multiple of sections (43) by the multiple of folds (42), and the number of sections (43) in the third region (53) is greater than the number of sections (43) in the first region (51).

4. The centrifugal blower (101, 201) according to any one of claims 1 to 3, wherein an interval between neighboring folds (42, 42) in the third region (53) is narrower than an interval between neighboring folds (42, 42) in the first region (51) .

5. The centrifugal blower (301) according to any one of claims 1 to 4, wherein a distance between the suction port (10a) of the scroll housing (10) and the third region (53) is shorter than a distance between the suction port (10a) and the first region (51).

## Patentansprüche

1. Zentrifugalgebläse (1, 101, 201, 301) zur Verwendung in Fahrzeugen, Folgendes umfassend:
einen Motor (2);
ein Laufrad (3), das mehrere Schaufeln (3a) aufweist, die eine Blattkaskade in Umfangsrichtung ausbilden, von dem Motor (2) angetrieben wird, um sich um eine sich in eine Axialrichtung erstreckende Drehachse (Ax) zu drehen, und Luft an einen Raum auf einer radialen Innenseite der Blattkaskade in Zentrifugalrichtung abgibt;
ein Schneckengehäuse (10), welches das Laufrad (3) enthält, einen Ansaugstutzen (10a), der sich in Axialrichtung öffnet, und einen Auslassstutzen (10b), der sich in Umfangsrichtung öffnet, aufweist und vom Ansaugstutzen (10a) angesaugte Luft durch die Drehung des Laufrads (3) aus dem Auslassstutzen (10b) ablässt;
eine Trennwand (15), die einen Innenraum des Schneckengehäuses (10) in Axialrichtung unterteilt;
einen Trennzylinder (30, 230, 330), der in das Schneckengehäuse (10) eingesetzt ist, der einen über den Ansaugstutzen (10a) in das Schneckengehäuse (10) angesaugten Luftstrom in einen ersten Luftstrom, der durch eine Außenseite des Trennzylinders (30, 230, 330) verläuft, und einen zweiten Luftstrom, der durch eine Innenseite des Trennzylinders (30, 230, 330) verläuft, unterteilt;
ein Lufteintrittsgehäuse (20, 120, 220, 320), das mit dem Schneckengehäuse (10) verbunden ist und einen externen Lufteinlass (21) zum Aufnehmen von Luft außerhalb eines Fahrzeugs, einen internen Lufteinlass (22) zum Aufnehmen von Luft innerhalb des Fahrzeugs und einen Innenraum, der einen Luftdurchgang zwischen dem externen Lufteinlass (21) und internen Lufteinlass (22) und dem Schneckengehäuse (10) ausbildet, aufweist;
einen Filter (40, 140), der in Innenraum des Lufteintrittsgehäuses (20, 120, 220, 320) derart angeordnet ist, dass eine Filterfläche die durch den Innenraum strömende Luft kreuzt;
eine erste Drehtür (28a), die zwischen dem externen Lufteinlass (21) und internen Lufteinlass (22) und dem Filter (40, 140) wirkt und Verhältnisse der von einem ersten externen Lufteinlassabschnitt (21a), der ein Abschnitt des externen Lufteinlasses (21) ist, in den Innenraum eingeleiteten Außenluft und von einem ersten internen Lufteinlassabschnitt (22a), der ein Abschnitt des internen Lufteinlasses (22) ist, in den Innenraum eingeleiteten Innenluft einstellt;
eine zweite Drehtür (28b), die zwischen dem externen Lufteinlass (21) und internen Lufteinlass (22) und dem Filter (40, 140) wirkt und Verhältnisse der von einem zweiten externen Lufteinlassabschnitt (21b), der ein weiterer Abschnitt des externen Lufteinlasses (21) ist, in den Innenraum eingeleiteten Außenluft und von einem zweiten internen Lufteinlassabschnitt (22b), der ein weiterer Abschnitt des internen Lufteinlasses (22) ist, in den Innenraum eingeleiteten Innenluft einstellt; und eine dritte Drehtür (28c), die zwischen dem externen Lufteinlass (21) und internen Lufteinlass (22) und dem Filter (40, 140) wirkt und Verhältnisse der von einem dritten externen Lufteinlassabschnitt (21c), der noch ein weiterer Abschnitt des externen Lufteinlasses (21) ist, in den Innenraum eingeleiteten Außenluft und von einem dritten internen Lufteinlassabschnitt (22c), der noch ein weiterer Abschnitt des internen Lufteinlasses (22) ist, in den Innenraum eingeleiteten Innenluft einstellt,
wobei
die erste Drehtür (28a), die zweite Drehtür (28b) und die dritte Drehtür (28c) in dieser Reihenfolge ausgerichtet sind,
der Innenraum des Lufteintrittsgehäuses (20, 120, 220, 320) einen ersten Raum (21A1), der ein Betriebsbereich der ersten Drehtür (28a) ist, einen zweiten Raum (20A2), der ein an den ersten Raum (20A1) angrenzender Raum und ein Betriebsbereich der zweiten Drehtür (28b) ist, und einen dritten Raum (20A3), der ein an den zweiten Raum (20A2) angrenzender Raum und ein Betriebsbereich der dritten Drehtür (28c) ist, umfasst,
der Filter (40, 140) einen dem ersten Raum (20A1) entgegengesetzten ersten Bereich (51), einen dem zweiten Raum (20A2) entgegengesetzten zweiten Bereich (52) und einen dem dritten Raum (20A3) entgegengesetzten dritten Bereich (53) aufweist,
der erste Bereich (51), in Axialrichtung betrachtet, mit einem Zungenabschnitt (10T) des Schneckengehäuses (10) zusammenfällt,
der zweite Bereich (52), in Axialrichtung betrachtet, die Drehachse (Ax) umfasst,
der dritte Bereich (53) auf einer dem ersten Bereich (51) entgegengesetzten Seite des zweiten Bereichs (52) positioniert ist und
das Zentrifugalgebläse zur Verwendung in Fahrzeugen **dadurch gekennzeichnet ist, dass**
die Filterflächengröße des dritten Bereichs (53) größer ist als die Filterflächengröße des ersten Bereichs (51).

2. Zentrifugalgebläse (1, 101, 201, 301) nach Anspruch 1, wobei, wenn der Filter (40) in einer Projektionsebene, die senkrecht zur Axialrichtung verläuft, vertikal projiziert wird, die vom dritten Bereich (53) bedeckte Bereichsfläche größer ist als die in der Projektionsebene vom ersten Bereich (51) bedeckte Bereichsfläche.

3. Zentrifugalgebläse (1, 101, 201, 301) nach Anspruch 1 oder 2, wobei der Filter (40) ein Filtermedium (41) umfasst, wobei mehrere Falten (42) derart ausgebildet sind, dass das Filtermedium (41) gefaltet ist, wobei das Filtermedium (41) durch die mehreren Falten (42) in mehrere Abschnitte (43) unterteilt wird und die Anzahl der Abschnitte (43) im dritten Bereich (53) größer ist als die Anzahl der Abschnitte (43) im ersten Bereich (51) .

4. Zentrifugalgebläse (101, 201) nach einem der Ansprüche 1 bis 3, wobei das Intervall zwischen angrenzenden Falten (42, 42) im dritten Bereich (53) schmaler ist als das Intervall zwischen angrenzenden Falten (42, 42) im ersten Bereich (51).

5. Zentrifugalgebläse (301) nach einem der Ansprüche 1 bis 4, wobei die Entfernung zwischen dem Ansaugstutzen (10a) des Schneckengehäuses (10) und dem dritten Bereich (53) kürzer ist als die Entfernung zwischen dem Ansaugstutzen (10a) und dem ersten Bereich (51).

## Revendications

1. Ventilateur centrifuge à utiliser dans un véhicule (1, 101, 201, 301), comprenant :
un moteur (2) ;
une turbine (3) qui a une pluralité d'aubes (3a) formant une cascade d'aubes dans la direction périphérique, est entraînée par le moteur (2) de sorte à tourner autour d'un axe de rotation (Ax) qui s'étend dans une direction axiale, et refoule l'air dans un espace sur un côté intérieur de direction radiale de la cascade d'aubes dans une direction centrifuge ;
un carter de volute (10) qui abrite la turbine (3), présente un orifice d'aspiration (10a) s'ouvrant dans la direction axiale et un orifice de refoulement (10b) s'ouvrant dans la direction périphérique, et envoie l'air aspiré par l'orifice d'aspiration (10a) hors de l'orifice de refoulement (10b) en raison d'une rotation de la turbine (3) ;
une paroi de séparation (15) qui divise l'espace interne du carter de volute (10) dans la direction axiale ;
un cylindre de séparation (30, 230, 330) inséré dans le carter de volute (10), qui divise un flux d'air aspiré dans le carter de volute (10) par l'orifice d'aspiration (10a) en un premier flux d'air qui traverse un côté extérieur du cylindre de séparation (30, 230, 330) et un second flux d'air qui traverse un côté intérieur du cylindre de séparation (30, 230, 330) ;
un boîtier d'admission d'air (20, 120, 220, 320), qui est relié au carter de volute (10) et possède une entrée d'air externe (21) pour aspirer l'air à l'extérieur d'un véhicule, une entrée d'air interne (22) pour aspirer l'air à l'intérieur du véhicule, et un espace interne qui forme un passage d'air entre l'entrée d'air externe (21) et l'entrée d'air interne (22) et le carter de volute (10) ;
un filtre (40, 140) disposé dans l'espace interne du boîtier d'admission d'air (20, 120, 220, 320) de sorte qu'une face filtrante coupe l'air circulant dans l'espace interne ;
une première porte rotative (28a), qui fonctionne entre l'entrée d'air externe (21) et l'entrée d'air interne (22) et le filtre (40, 140) et ajuste les rapports d'air externe introduit depuis une première partie d'entrée d'air externe (21a), qui est une partie de l'entrée d'air externe (21), dans l'espace interne et de l'air interne introduit depuis une première partie d'entrée d'air interne (22a), qui est une partie de l'entrée d'air interne (22), dans l'espace interne ;
une deuxième porte rotative (28b), qui fonctionne entre l'entrée d'air externe (21) et l'entrée d'air interne (22) et le filtre (40, 140) et ajuste les rapports d'air externe introduit depuis une seconde partie d'entrée d'air externe (21b), qui est une autre partie de l'entrée d'air externe (21), dans l'espace interne et de l'air interne depuis une seconde partie d'entrée d'air interne (22b), qui est une autre partie de l'entrée d'air interne (22), dans l'espace interne ; et
une troisième porte rotative (28c), qui fonctionne entre l'entrée d'air externe (21) et l'entrée d'air interne (22) et le filtre (40, 140) et ajuste les rapports de l'air externe depuis une troisième partie d'entrée d'air externe (21c), qui est encore une autre partie de l'entrée d'air externe (21), dans l'espace interne et de l'air interne depuis une troisième partie d'entrée d'air interne (22c), qui est encore une autre partie de l'entrée d'air interne (22), dans l'espace interne,
la première porte rotative (28a), la deuxième porte rotative (28b) et la troisième porte rotative (28c) étant alignées dans cet ordre,
l'espace interne du boîtier d'admission d'air (20, 120, 220, 320) comprenant un premier espace (20A1), qui est une plage de fonctionnement de la première porte rotative (28a), un deuxième espace (20A2), qui est un espace voisin du premier espace (20A1) et est une plage de fonctionnement de la deuxième porte rotative (28b), et un troisième espace (20A3), qui est un espace voisin du deuxième espace (20A2) et est une plage de fonctionnement de la troisième porte rotative (28c),
le filtre (40, 140) présentant une première région (51) opposée au premier espace (20A1), une deuxième région (52) opposée au deuxième espace (20A2), et une troisième région (53) opposée au troisième espace (20A3),
la première région (51) coïncidant avec une partie de languette (10T) du carter de volute (10) dans la direction axiale,
la deuxième région (52) comprenant l'axe de rotation (Ax) dans la direction axiale,
la troisième région (53) étant positionnée sur un côté de la deuxième région (52) opposé à celui de la première région (51), et
le ventilateur centrifuge destiné à être utilisé dans un véhicule étant **caractérisé en ce que**
une zone de face filtrante de la troisième région (53) est plus grande qu'une zone de face filtrante de la première région (51).

2. Ventilateur centrifuge (1, 101, 201, 301) selon la revendication 1, lorsque le filtre (40) est projeté verticalement dans un plan de projection perpendiculaire à la direction axiale, une zone d'une région couverte par la troisième région (53) étant plus grande qu'une zone d'une région couverte par la première région (51) dans le plan de projection.

3. Ventilateur centrifuge (1, 101, 201, 301) selon la revendication 1 ou 2, le filtre (40) comprenant un milieu filtrant (41), une pluralité de plis (42) étant formés de sorte que le milieu filtrant (41) soit de forme plissée, le milieu filtrant (41) étant divisé en une pluralité de sections (43) par la pluralité de plis (42), et le nombre de sections (43) dans la troisième région (53) étant plus grand que le nombre de sections (43) dans la première région (51).

4. Ventilateur centrifuge (101, 201) selon l'une quelconque des revendications 1 à 3, un intervalle entre des plis voisins (42, 42) dans la troisième région (53) étant plus étroit qu'un intervalle entre des plis voisins (42, 42) dans la première région (51).

5. Ventilateur centrifuge (301) selon l'une quelconque des revendications 1 à 4, une distance entre l'orifice d'aspiration (10a) du carter de volute (10) et la troisième région (53) étant plus courte qu'une distance entre l'orifice d'aspiration (10a) et la première région (51) .
